# EUROPÄISCHE PATENTSCHRIFT

(11) **EP 1 965 017 B1**
(45) Veröffentlichungstag und Bekanntmachung des Hinweises auf die Patenterteilung: **12.09.2012**
(21) Anmeldenummer: 08003630.4
(22) Anmeldetag: 28.02.2008
(51) Int. Cl.: E06B 9/44, B60J 1/20

(54) **Verfahren zur Befestigung eines flexiblen Flächengebildes an einer Wickelwelle und Rollo**
Method for attaching a flexible area-measured material to a winding shaft and roller blind
Procédé de fixation d'une structure plate flexible sur un arbre d'enroulement et store

(30) Priorität: 02.03.2007 DE 102007011608
(43) Veröffentlichungstag der Anmeldung: 03.09.2008
(60) Teilanmeldung: 12162481.1
(73) Patentinhaber: BOS GmbH & Co. KG, 73760 Ostfildern (DE)
(72) Erfinder: Debert, Dieter, 70437 Stuttgart (DE); Ehrenberger, Marina, 73061 Ebersbach (DE)
(74) Vertreter: Patentanwälte Ruff, Wilhelm, Beier, Dauster & Partner

(56) Entgegenhaltungen:
- EP-A2- 1 447 276
- DE-A1- 19 530 310
- DE-U1- 9 111 226
- FR-A- 981 666
- US-A- 1 773 786
- US-A- 4 139 231
- US-A1- 2006 207 731

## Beschreibung

Die Erfindung betrifft ein Verfahren zur Befestigung eines flexiblen Flächengebildes an einer rohrförmigen Wickelwelle. Die Erfindung betrifft weiter ein Rollo mit einer Wickelwelle und einem daran befestigten Flächengebilde.

Rollos werden auf vielfältige Weise in Kraftfahrzeugen und/oder in anderen Einsatzgebieten verwendet. Beispielsweise werden Rollos in Fahrzeugen für eine Gepäcksicherung, als Sichtschutz, als Sonnenschutz oder dergleichen eingesetzt. Rollos umfassen grundsätzlich eine rohrförmige Wickelwelle, auf welcher ein flexibles Flächengebilde, beispielsweise eine Plane oder ein Netz, auf- und abwickelbar befestigt ist.

Für eine Fertigung eines Rollos wird üblicherweise zunächst ein flexibles Flächengebilde oder eine Rollobahn in einer gewünschten Größe aus einem gewünschten Material ausgeschnitten. Ein Ausschneiden der Rollobahn erfolgt herkömmlich derart, dass an einem hinteren Ende der Rollobahn, mit welcher die Rollobahn auf der Wickelwelle befestigt wird, seitliche Laschen verbleiben, welche über seitliche, die Breite der Rollobahn bestimmende Ränder überstehen. Durch die Laschen wird beispielsweise eine T-förmige Rollobahn geschaffen. Zum Befestigen der Rollobahn an der Wickelwelle wird das Ende der Rollobahn mit der Wickelwelle verklebt, wobei die seitlich über die Ränder ragenden Laschen umgeschlagen und in die Wickelwelle von deren Enden aus eingeführt werden. Durch das Einführen der Laschen in das Innere der rohrförmigen Wickelwelle ist eine gute und sichere Befestigung möglich. Um derartige Laschen auszuformen, muss jedoch zunächst ein Material in einer Breite bereitgestellt werden, welche der Breite der Rollobahn plus der Breite der beiden seitlichen Laschen entspricht. Abgesehen von den Laschen wird das überschüssige Material in einem weiteren Schritt an den seitlichen Rändern der Rollobahn entfernt. Bei einer Fertigung derartiger Rollos entsteht somit viel Verschnitt an Material des Flächengebildes.

Aus der FR 981666 A ist ein Rollo mit einer rohrförmigen Wickelwelle und einem daran befestigten, flexiblen Flächengebilde bekannt, bei dem das flexible Flächengebilde durch entsprechende Axialschlitze in der Wickelwelle hindurchgezogen wird, um hierdurch auf der Wickelwelle gehalten zu sein.

Die DE 19530310 A1 offenbart ein flexibles Flächengebilde in Form einer Markise, das an einem Stirnendbereich zu einer zylindrischen Aufnahmeschlaufe gefügt ist. In diese Aufnahmeschlaufe taucht ein zylindrisches Rohr ein. Über die zylindrische Schlaufe der Markise und über das innere, zylindrische Rohr wird ein druckübertragendes Rohr mit C-förmigem Querschnitt geschoben, das klemmend auf dem inneren Rohr und der zylindrischen Schlaufe der Markise gehalten ist. Das äußere, C-förmige Rohr ist über seine Länge schlitzförmig offen. Durch diesen Schlitz ragt die Markise hindurch. Die zylindrische Schlaufe der Markise wird zwischen den beiden Rohren geklemmt, so dass eine Drehbewegung der Rohre zu einem Auf- oder Abwickeln der Markise führt.

Aus der DE 9111226 U1 ist ein Sonnenblendrollo für ein Kraftfahrzeug bekannt, bei dem das flexible Flächengebilde in Form einer Blende stirnseitig in einem Längsschlitz eines Aufwickelrohres gehalten ist. Hierzu ist das flexible Flächengebilde stirnseitig mit einer über seine Breite durchgängigen Lasche versehen, die in den axialen Längsschlitz dieses Wickelrohres eingeklemmt ist. Es ist eine Aufgabe der Erfindung ein Verfahren zur Befestigung eines flexiblen Flächengebildes an einer Wickelwelle zu schaffen, bei welchem ein Verschnitt reduziert ist. Es ist weiter Aufgabe der Erfindung ein entsprechendes Rollo zu schaffen.

Für das Verfahren wird diese Aufgabe durch die Merkmale des Anspruchs 1 gelöst. Das flexible Flächengebilde ist üblicherweise rechteckförmig, mit einer auf- und abwickelbaren Längsrichtung, auch als Aufwickelrichtung bezeichnet, und einer Querrichtung. Die Breite des flexiblen Flächengebildes, d.h. die Ausdehnung in Querrichtung, ist dabei üblicherweise im Wesentlichen gleich der Länge der Wickelwelle in deren Axialrichtung, wobei die Wickelwelle das flexible Flächengebilde in Axialrichtung der Wickelwelle für eine bessere Handhabung überragen kann. Durch ein erfindungsgemäßes Einbringen von Ausnehmungen am Umfang der Wickelwelle ist es möglich, Laschen an einer anderen Stelle als den offenen Enden der Wickelwelle für eine Befestigung in die Wickelwelle einzuführen. Das Flächengebilde ist vorzugsweise bereits auf eine normale, der Funktion des Rollos angepassten Größe zugeschnitten. Das Flächengebilde kann zusätzlich mit der Wickelwelle verklebt sein. Durch die Anbringung mittels Laschen kann ein Verdrehen und/oder Verschieben der Plane relativ zu der Wickelwelle verhindert werden, selbst wenn eine zusätzliche Verklebung versagen sollte und/oder keine zusätzliche Verklebung vorgesehen ist. Die Lasche kann dabei an einer Ecke des flexiblen Flächengebildes durch Abknicken erzeugt werden.

Das Flächengebilde ist vorzugsweise bereits auf eine normale, der Funktion des Rollos angepasste Größe zugeschnitten. Erfindungsgemäß entsteht durch das Einschneiden bzw. Abwinkeln bei einer Ausbildung der Lasche kein oder nur minimaler Verschnitt. In anderen Ausgestaltungen kann es jedoch von Vorteil sein, dass die Lasche in Längs- und/oder Querrichtung die normale, der Funktion angepasste Größe einer Rollobahn überragt. Durch die erfindungsgemäße Befestigung ist es dabei ebenfalls möglich, einen Verschnitt zumindest zu reduzieren.

In einer bevorzugten Ausgestaltung der Erfindung wird der Schnitt in Querrichtung an einem seitlichen Rand des flexiblen Flächengebildes angesetzt. Dadurch ist mit einem Schnitt eine in beliebigen Winkeln abwinkelbare Lasche für eine Befestigung erzeugbar. Wird der Schnitt dagegen beabstandet zu einem seitlichen Rand in dem Flächengebilde ausgebildet, so kann eine für ein Abwinkeln der Lasche notwendige Verformung des flexiblen Flächengebildes durch weitere Schnitte vereinfacht werden.

In einem Ausführungsbeispiel wird der mindestens eine Schlitz in Umfangsrichtung in einem Abstand von einem Ende der Wickelwelle eingebracht, wobei eine Breite der Lasche in etwa gleich dem Abstand des Schlitzes von dem Ende der Wickelwelle ist. Dabei ist es möglich, ein flexibles Flächengebilde ohne Verschnitt an der Wickelwelle anzubringen, dessen Breite der Länge der Wickelwelle in Axialrichtung entspricht. Die Breite der Lasche kann in einer Ausgestaltung durch einen entsprechenden Schnitt auch größer gewählt sein als der Abstand des Schlitzes von dem Ende der Wickelwelle, wobei die Lasche nicht über die gesamte Breite in den Schlitz an der Wickelwelle eingefügt wird. Der Schlitz wird vorzugsweise in Umfangsrichtung in einem Abstand von dem Ende der Wickelwelle eingebracht, der kleiner ist als eine Länge einer in das Ende der Wickelwelle einzusetzenden Buchse, insbesondere ca. einem Viertel bis drei Viertel der Länge, vorzugsweise ca. der Hälfte der Länge entspricht.

In einer Weiterbildung des Verfahrens wird an dem flexiblen Flächengebilde mindestens eine Lasche durch den ersten Schnitt in die Querrichtung und einen den ersten Schnitt kreuzenden, zweiten Schnitt in die Längsrichtung des flexiblen Flächengebildes erzeugt. Der zweite Schnitt wird dabei vorzugsweise von einer an der Wickelwelle zu befestigenden Endkante aus eingebracht. In anderen Ausgestaltungen wird ein dritter Schnitt eingebracht, um durch drei U-förmig angeordnete Schnitte eine rechtwinklig abwinkelbare Lasche zu erzeugen.

In einer Ausführungsform des Verfahrens wird das flexible Flächengebilde mit der Wickelwelle verklebt. Ein Verkleben kann dabei sowohl an den Laschen als auch in Bereichen zwischen den Laschen erfolgen.

Die Aufgabe wir weiter durch ein Rollo mit den Merkmalen des Anspruchs 3 gelöst. Durch Einführen des Flächengebildes in die Wickelwelle ist das Flächengebilde im Inneren der Wickelwelle an dieser befestigbar, beispielsweise mit dieser verklebbar und/oder mit dieser verklemmbar, vorzugsweise durch eine Buchse.

Weitere Vorteile der Erfindung ergeben sich aus der nachfolgenden Beschreibung von Ausführungsbeispielen der Erfindung, die in den Zeichnungen schematisch dargestellt sind. Für gleiche oder ähnliche Bauteile werden in den Zeichnungen einheitliche Bezugszeichen verwendet. Sämtliche aus den Ansprüchen, der Beschreibung oder den Zeichnungen hervorgehende Merkmale und/oder Vorteile, einschließlich konstruktiver Einzelheiten, räumlicher Anordnungen und Verfahrensschritte, können sowohl für sich als auch in den verschiedensten Kombinationen erfindungswesentlich sein. Als Teil eines Ausführungsbeispiels beschriebene oder dargestellte Merkmale können ebenso in einem anderen Ausführungsbeispiel verwendet werden, um eine weitere Ausführungsform der Erfindung zu erhalten.

In den Zeichnungen zeigen:
- Fig. 1a:: eine Wickelwelle für ein Rollo gemäß einem ersten Ausführungsbeispiel der Erfindung;
- Fig. 1b:: ein flexibles Flächengebilde für die Wickelwelle gemäß Fig. 1a;
- Fig. 1c:: ein Rollo umfassend eine Wickelwelle gemäß Fig. 1a und ein daran angebrachtes flexibles Flächengebilde gemäß Fig. 1b;
- Fig. 2a:: eine Wickelwelle für ein Rollo gemäß einem zweiten Ausführungsbeispiel der Erfindung;
- Fig. 2b:: ein flexibles Flächengebilde für die Wickelwelle gemäß Fig. 2a;
- Fig. 3a:: eine Wickelwelle für ein nicht zur Erfindung zählendes Rollo;
- Fig. 3b:: ein flexibles Flächengebilde für die Wickelwelle gemäß Fig. 3a;
- Fig. 3c:: ein Rollo umfassend eine Wickelwelle gemäß Fig. 3a und ein daran angebrachtes flexibles Flächengebilde gemäß Fig. 3b;
- Fig. 4a:: eine Wickelwelle für ein nicht zur Erfindung zählendes Rollo;
- Fig. 4b:: ein flexibles Flächengebilde für die Wickelwelle gemäß Fig. 4a;
- Fig. 4c:: ein Rollo umfassend eine Wickelwelle gemäß Fig. 4a und ein daran angebrachtes flexibles Flächengebilde gemäß Fig. 4b;
- Fig. 5a:: eine Wickelwelle für ein nicht zur Erfindung zählendes Rollo,
- Fig. 5b:: ein Rollo umfassend eine Wickelwelle gemäß Fig. 5a und ein daran angebrachtes flexibles Flächengebilde gemäß Fig. 4b,
- Fig. 6a:: eine Wickelwelle für ein nicht zur Erfindung zählendes Rollo,
- Fig. 6b:: ein flexibles Flächengebilde für die Wickelwelle gemäß Fig. 6a,
- Fig. 7:: eine Wickelwelle, ein flexibles Flächengebilde und eine Buchse für ein nicht zur Erfindung zählendes Rollo in einer Explosionsdarstellung und
- Fig. 8:: eine Wickelwelle, ein flexibles Flächengebilde und eine Buchse für ein nicht zur Erfindung zählendes Rollo in einer Explosionsdarstellung.

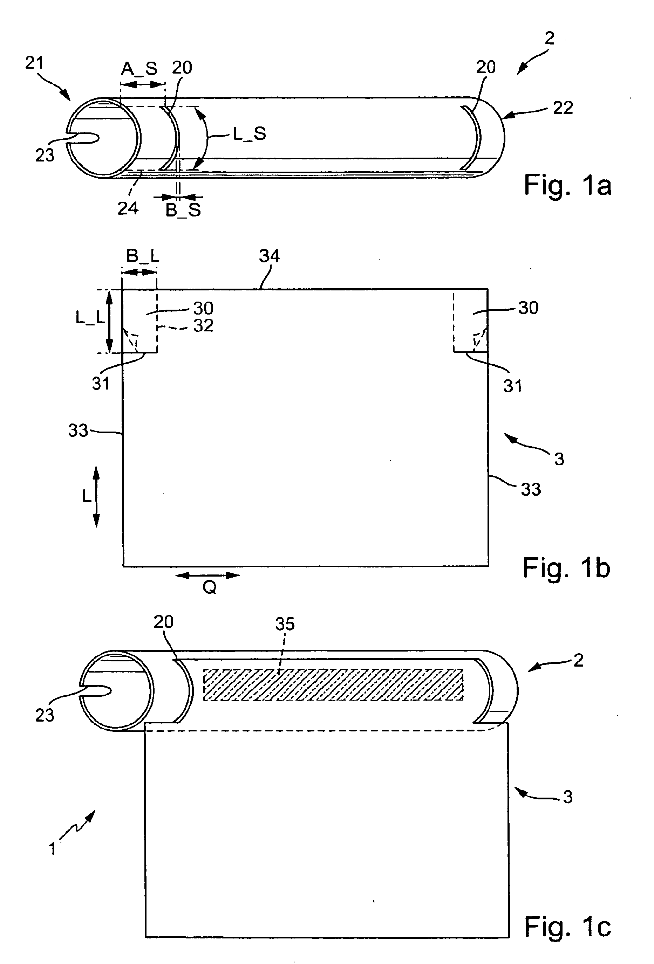

Fig. 1a bis 1c zeigen schematisch ein erstes Ausführungsbeispiel der Erfindung. Dabei zeigt Fig. 1c ein Rollo 1 umfassend eine Wickelwelle 2 und ein daran befestigtes, flexibles Flächengebilde 3, insbesondere eine Plane. Fig. 1a zeigt schematisch die Wickelwelle 2 in einer perspektivischen Darstellung und Fig. 1b zeigt schematisch eine Draufsicht auf das Flächengebilde 3.

Wie am besten in Fig. 1a erkennbar, sind in einem Umfang der Wickelwelle 2 zwei Schlitze 20 ausgeformt. Die Schlitze 20 erstrecken sich jeweils mit einer Bogenlänge L_S in Umfangsrichtung. Die Schlitze 20 sind an den beiden Enden 21, 22 der rohrförmigen Wickelwelle 2 jeweils mit einem Abstand A_S zu dem zugehörigen Ende 21, 22 ausgeformt. Ist der Rand der Wickelwelle 2 an den Enden 21, 22 wie dargestellt regelmäßig, so ist der Abstand A_S konstant. Bei einem nicht dargestellten, unregelmäßigen Rand sind entsprechende Bezugspunkte für den Abstand A_S festzulegen.

Die dargestellte Wickelwelle 2 weist weiter eine Nut 23 auf, durch welche eine nicht dargestellte Lagerbuchse, die in ein Ende 21, 22 der Wickelwelle 2 einsetzbar ist, zentrierbar ist.

Wie in Fig. 1b erkennbar ist, weist das flexible Flächengebilde 3 zwei Laschen 30 auf. Zum Ausformen der Laschen 30 wird das flexible Flächengebilde 3 in Querrichtung Q an seitlichen Rändern 33 durch Schnitte 31 eingeschnitten. Die Laschen 30 sind jeweils um Knicklinien 32, die wie dargestellt parallel zu einer Längsrichtung L oder in einem Winkel dazu verlaufen, gegenüber der mit der Zeichenebene zusammenfallenden Ebene des Flächengebildes 3 abwinkelbar. Ein Abwinkeln der Laschen um die Knicklinien 32 ist in Fig. 1b durch gestrichelte Linien angedeutet.

Die abgewinkelten Laschen 30 sind - wie in Fig. 1c dargestellt - in die Schlitze 20 der Wickelwelle 2 einführbar. Die Breite B_S der Schlitze 20 ist hierfür größer als eine sich senkrecht zur Zeichenebene gemäß Fig. 1b erstreckende Dicke des Flächengebildes 3. Die Breite B_S kann an eine Steifigkeit des flexiblen Flächengebildes 3 und damit an eine Verformbarkeit zum Einführen in den Schlitz 20 angepasst werden. Die eingeführten Laschen 30 können in einer Ausführungsform im Inneren der Wickelwelle 2 mit dieser verklebt und/oder verklemmt werden. Für ein Verklemmen des Flächengebildes sind beispielsweise nicht dargestellte Lagerbuchsen verwendbar, welche in die Enden 21, 22 der Wickelwelle 2 eingesetzt werden.

Damit die Laschen 30 gemäß Fig. 1b in die Schlitze 20 der Wickelwelle 2 einsteckbar sind, ist eine Länge L_L der Lasche 30 in Längsrichtung maximal gleich der Bogenlänge L_S der Schlitz 20. In anderen, nicht dargestellten Ausgestaltungen ist es jedoch auch denkbar, dass Laschen das Flächengebilde in dessen Längsrichtung an einer Endkante überragen, so dass ein U-förmiges Ende geschaffen wird. Beim Fertigen eines derartigen Flächengebildes verbleibt jedoch ein Verschnitt.

Eine Breite B_L der Lasche 30 entspricht vorzugsweise dem Abstand A_S der Schlitze 20 von den jeweiligen Enden 21, 22. Um eine Befestigung des flexiblen Flächengebildes 3 auf der Wickelwelle 2 zu verbessern, ist in dem dargestellten Ausführungsbeispiel an einer Unterseite des Flächengebildes 3 in einem Kontaktbereich 35 mit der Wickelwelle 2 ein Klebstoff aufgebracht.

In einer Variation des ersten Ausführungsbeispiels wird in die Wickelwelle 2 ein sich bis zu dem Ende 21 der Wickelwelle 2 erstreckender Ausschnitt 24, wie schematisch durch eine gestrichelte Linie angedeutet, eingebracht. Durch einen Ausschnitt 24 anstelle eines Schlitzes 20 wird ein einführen der Laschen 30 in das Innere der Wickelwelle 2 vereinfacht.

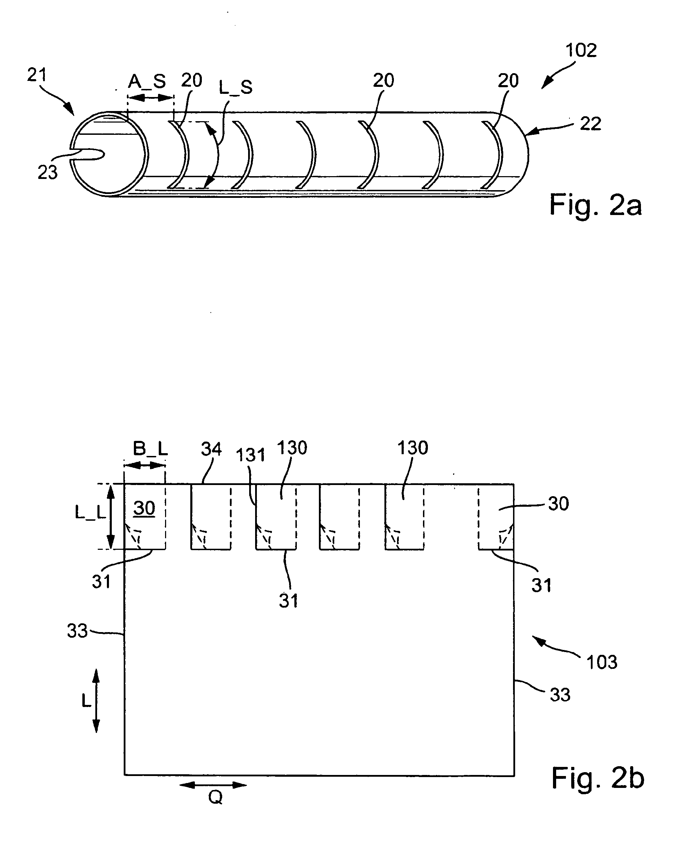

Fig. 2a zeigt schematisch eine Wickelwelle 102 für ein Rollo gemäß einem zweiten Ausführungsbeispiel der Erfindung. In die Wickelwelle 102 sind sechs Schlitze 20 eingebracht, welche sich jeweils mit einer Bogenlänge L_S in Umfangsrichtung erstrecken. In anderen Ausgestaltungen der Erfindung können mehr als sechs oder weniger als sechs Schlitze 20 in die Wickelwelle 102 eingearbeitet, beispielsweise eingeschnitten werden.

Fig. 2b zeigt ein an der Wickelwelle 102 gemäß Fig. 2a befestigbares, flexibles Flächengebilde 103. An dem flexiblen Flächengebilde 103 sind sechs Laschen 30, 130 ausgeformt. Die beiden äußeren Laschen 30 sind dabei jeweils durch einen Schnitt 31 in Querrichtung Q des flexiblen Flächengebildes 103 an den seitlichen Rändern 33 gebildet. Für die mittleren Laschen 130 ist das flexible Flächengebilde 103 zusätzlich zu den Schnitten 31 in Querrichtung Q durch Schnitte 131 in Längsrichtung L des flexiblen Flächengebildes 103 von der Endkante 34 eingeschnitten. Die Laschen 30, 130 sind von dem flexiblen Flächengebilde 103 abwinkelbar. Abgewinkelte Laschen 30, 130 sind in die Schlitze 20 der Wickelwelle 102 gemäß Fig. 2a einsetzbar, so dass das flexible Flächengebilde 103 mit der Wickelwelle 102 in deren Inneren verbindbar ist. Die Befestigung des flexiblen Flächengebildes 103 an der Wickelwelle 102 kann durch eine Klebschicht oder dergleichen verbessert werden. In einer anderen Ausgestaltung der Erfindung werden die Längsschnitte 131 beabstandet zu der Endkante 34 eingebracht. Durch einen weiteren Schnitt in Querrichtung kann dabei ebenfalls eine in beliebigen Winkeln abwinkelbare Lasche durch drei U-förmig angeordnete Schnitte erzeugt werden.

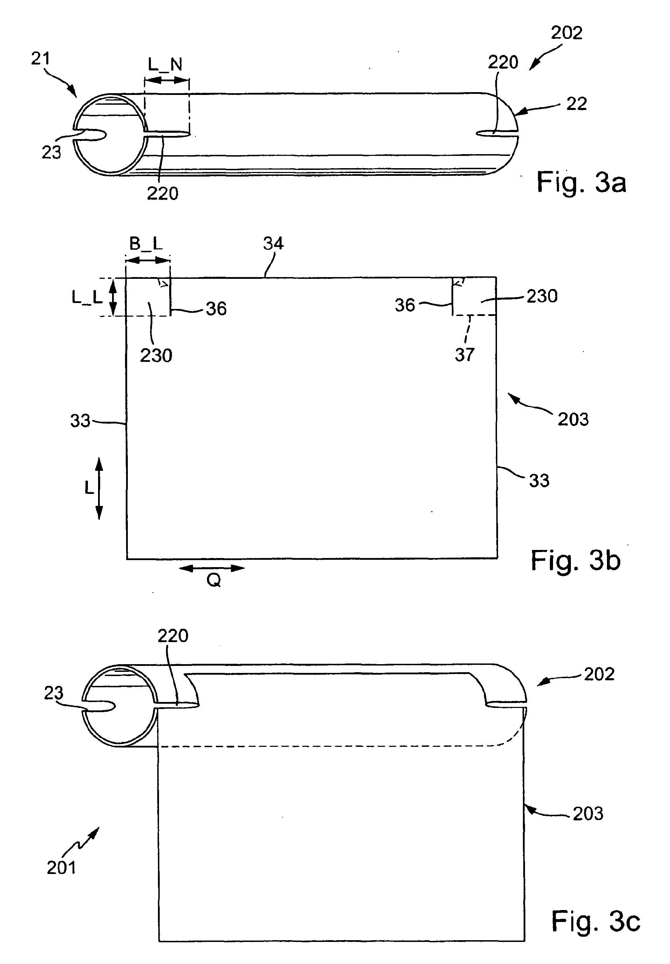

Fig. 3a bis 3c zeigen eine Wickelwelle 202 und ein flexibles Flächengebilde 203 für ein Rollo 201 gemäß einem dritten Ausführungsbeispiel der Erfindung. Die Bauteile entsprechen dabei im Wesentlichen den Bauteilen gemäß den Fig. 1a bis 1c und für gleiche Elemente werden einheitliche Bezugszeichen verwendet. Zur Befestigung des flexiblen Flächengebildes 203 an der Wickelwelle 202 werden in die Enden 21, 22 der Wickelwelle 202 Schlitze 220 in axialer Richtung der Wickelwelle 202 eingebracht. Die Schlitze 220 in Axialrichtung oder Axialnuten haben eine Länge L_N. Wie am besten in Fig. 3b erkennbar, sind an den Seitenrändern 33 des flexiblen Flächengebildes 203 an einer an der Wickelwelle 202 zu befestigenden Endkante 34 Laschen 230 ausgeformt. Die Laschen 230 sind durch Schnitte 36 in Längsrichtung L des flexiblen Flächengebildes 203 gebildet, wobei die dargestellten Schnitte 36 an der Endkante 34 des flexiblen Flächengebildes 203 enden. Die Laschen 230 haben eine Breite B_L und eine Länge L_L, wobei die Breite B_L im Wesentlichen einer Länge L_N der axialen Schlitze 220 gemäß Fig. 3a entspricht. Die Laschen 230 sind um parallel zur Querrichtung Q verlaufende Knicklinien 37 von dem flexiblen Flächengebilde 203 abwinkelbar, wobei die abgewinkelten Laschen 230, wie in Fig. 3c dargestellt, in die Schlitze 220 einführbar sind und das flexible Flächengebilde 203 zur Herstellung des Rollos 201 an der Wickelwelle 202 gemäß Fig. 3c befestigbar ist. Die eingeführten Laschen 230 sind im Inneren der Wickelwelle 202 mit dieser verklebbar, verklemmbar oder auf andere Weise mit dieser verbindbar.

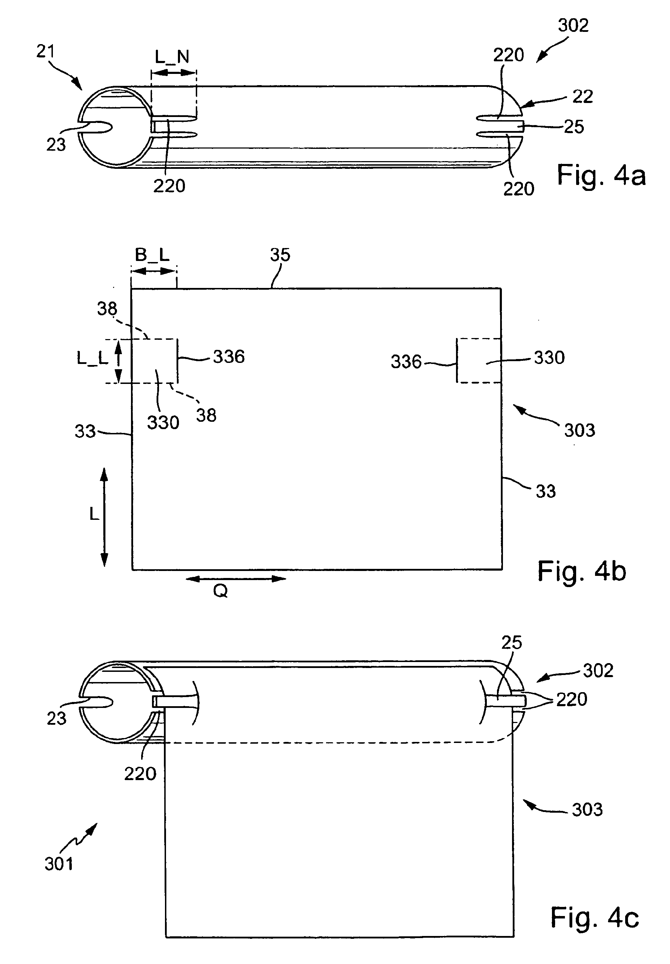

Fig. 4a bis 4c zeigen schematisch eine Wickelwelle 302 und ein flexibles Flächengebilde 303 für ein Rollo 301 gemäß einem vierten Ausführungsbeispiel der Erfindung. Die Bauteile entsprechen dabei im Wesentlichen den Bauteilen gemäß den Fig. 3a bis 3c und für gleiche Elemente werden einheitliche Bezugszeichen verwendet.

An der Wickelwelle 302 gemäß Fig. 4a und 4c sind an den Enden 21, 22 jeweils zwei Schlitze 220 in axialer Richtung ausgebildet, wobei die axialen Schlitze 220 jeweils die Länge L_N aufweisen. Durch die Schlitze 220 wird an jedem Ende 21, 22 jeweils eine Nase 25 gebildet. Zur Befestigung des flexiblen Flächengebildes 303 gemäß Fig. 4b und 4c an der Wickelwelle 302 sind in dem flexiblen Flächengebilde 303 Laschen 330 mit Länge L_L und Breite B_L ausgeformt. Die Laschen 330 sind jeweils durch einen Schnitt 336 in Längsrichtung L parallel zu den seitlichen Rändern 33 und mit einem Abstand B_L zu diesen ausgeformt. Durch Verformung des flexiblen Flächengebildes 303 können die Laschen 330 von einer mit der Zeichenebene gemäß Fig. 3b zusammenfallenden Ebenen des flexiblen Flächengebildes 303 um Knicklinien 38 parallel zur Querrichtung Q abgewinkelt werden. Die abgewinkelten Laschen 330 können zu Befestigung des flexiblen Flächengebildes 303 an der Wickelwelle 302, wie in Fig. 4c dargestellt, in die axialen Schlitze 220 unter die Nase 25 geschoben werden. Zur Befestigung an beiden Enden ist dabei beispielsweise eine Elastizität des flexiblen Flächengebildes 303 und/oder einer Verformbarkeit der Nasen 25 ausnutzbar. In anderen Ausgestaltungen ist eine derartige Befestigung nur an einem der Enden 21, 22 der Wickelwelle 402 vorgesehen.

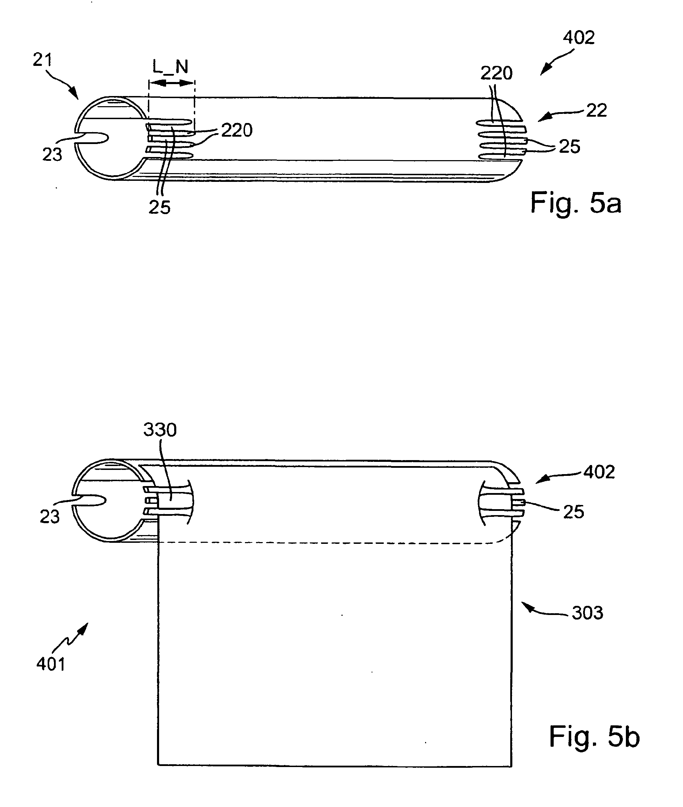

Fig. 5a und 5b zeigen eine Wickelwelle 402 und das flexible Flächengebilde 303 gemäß Fig. 4b für ein Rollo 401 gemäß einem fünften Ausführungsbeispiel der Erfindung. Das Ausführungsbeispiel entspricht im Wesentlichen dem Ausführungsbeispiel gemäß den Fig. 4a bis 4c und für gleiche Elemente werden einheitliche Bezugszeichen verwendet.

Wie in Fig. 5a und 5b erkennbar, sind an den Enden 21, 22 der Wickelwelle 2 jeweils vier sich in axialer Richtung der Wickelwelle 402 erstreckende Schlitz 220 mit Länge L_N ausgebildet. Durch die vier Schlitze 220 werden an den Enden jeweils drei Nasen 25 gebildet. An der Wickelwelle 402 ist, wie in Fig. 5b dargestellt, ein flexibles Flächengebilde 303 gemäß Fig. 4b befestigbar, wobei die Lasche 330, wie in Fig. 5b dargestellt, mit den Nasen 25 der Wickelwelle 402 verwoben wird. Um eine Befestigung des flexiblen Flächengebildes 303 an beiden Enden 21, 22 der Wickelwelle 402 zu realisieren, ist ebenfalls eine Elastizität des flexiblen Flächengebildes 303 ausnutzbar. In anderen Ausgestaltungen der Erfindung werden die verschiedenen Befestigungsarten miteinander kombiniert und/oder wird das flexible Flächengebilde nur an einem seitlichen Rand mit der Wickelwelle verwoben.

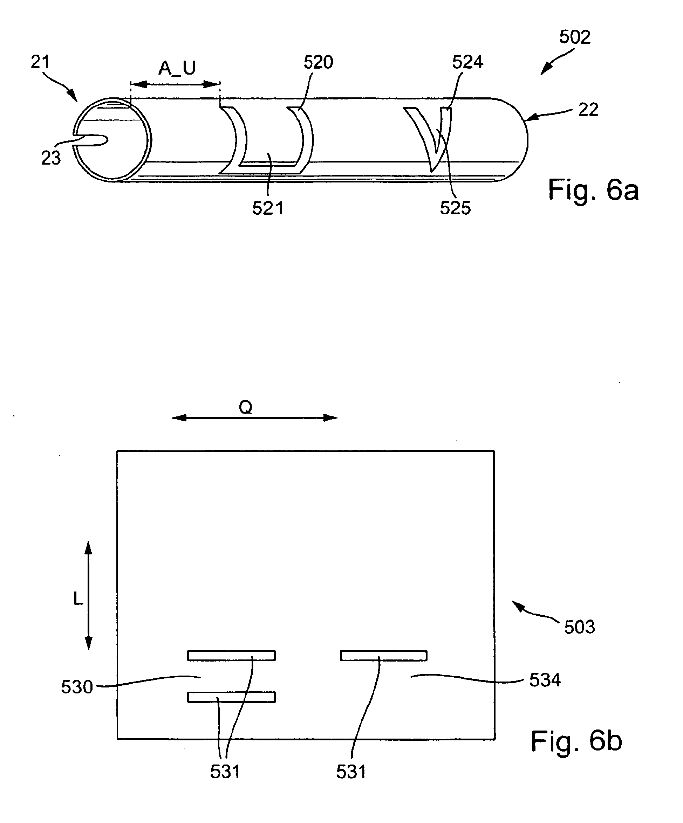

Figur 6a zeigt eine Wickelwelle 502 für ein Rollo gemäß einem sechsten Ausführungsbeispiel der Erfindung. Für Elemente der Wickelwelle 502, welche der Wickelwelle 2 gemäß Figur 1a entsprechen, werden gleiche Bezugzeichen verwendet und auf eine detaillierte Beschreibung dieser Elemente wird verzichtet. Die dargestellte Wickelwelle 502 weist eine im Wesentlichen U-förmige Ausnehmung 520, durch welche eine erste Nase 521 gebildet wird, und eine im Wesentlichen V-förmige Ausnehmung 524, durch welche eine weitere Nase 525 gebildet wird, auf. Die dargestellten Ausnehmungen 520, 524 sind lediglich beispielhaft. Selbstverständlich sind ebenso Wickelwellen denkbar, welche zwei oder mehr U-förmige Ausnehmungen 520 und/oder zwei oder mehr V-förmige Ausnehmungen 524 und/oder Abwandlungen davon aufweisen. Auch sind Wickelwellen denkbar, welche nur eine U-oder V-förmige Ausnehmung aufweisen, wobei jedoch für eine bessere Verdrehsicherung zwei oder mehr in Axialrichtung der Wickelwelle voneinander beabstandete Ausnehmungen vorteilhaft sind. Die Ausnehmungen 520, 524 sind in einem beliebigen Abstand A_U von den Enden 21, 22 der rohrförmigen Wickelwelle 502 in diese einbringbar.

Figur 6b zeigt ein flexibles Flächengebilde 503 mit Laschen 530, 534 durch welche das flexible Flächengebilde 503 an der Wickelwelle 502 gemäß Figur 6a befestigbar ist. In dem dargestellten Ausführungsbeispiel wird eine erste Lasche 530 durch zwei in Querrichtung Q verlaufende Schlitze 531 ausgebildet. Die Nase 521 der in Figur 6a dargestellten Wickelwelle 502 kann beim Anbringen des flexiblen Flächengebildes 503 an der Wickelwelle 502 durch die Schlitze 531 geführt werden, so dass die Lasche 530 in die Ausnehmung 520 eingeführt wird. Eine Kante der Nase 521 kommt dabei unter dem flexiblen Flächengebilde 503 zu liegen. Auch bei vollkommen abgewickeltem Flächengebilde steht die Kante somit nicht hervor und eine Verletzungsgefahr und/oder die Gefahr einer Beschädigung wird somit ausgeschlossen. Ebenso ist es denkbar, dass eine Lasche für die Ausnehmung 520 durch nur einen Schlitz 531 gebildet wird, wobei die Kante der Nase 521 über dem entsprechenden Bereich des flexiblen Flächengebilde zu liegen kommt. Es sei angemerkt, dass eine Verletzungsgefahr auch hier aufgrund der üblichen Anordnung einer Wickelwelle minimal ist. Eine derartige Lasche 534 ist in Figur 6b schematisch für eine Verbindung mit der Nase 525 gemäß Figur 6a dargestellt. Die Lasche 534 wird durch nur einen Schlitz 531 in Querrichtung Q gebildet. Die Nase 525 kommt über dem flexiblen Flächengebilde 503 zuliegen, so dass das flexible Flächengebilde 503 an der Wickelwelle 502 gemäß Figur 6a befestigt wird. Selbstverständlich wäre es auch denkbar, dass flexible Flächengebilde 503 umgekehrt an der Wickelwelle 502 zu befestigen, wobei die Nase 525 in zwei Schlitze 531 eingeführt ist. Durch die Ausnehmungen 520, 524 und die korrespondierenden Laschen 530, 531 ist das flexible Flächengebilde 503 an der Wickelwelle 502 gegen ein Abziehen in eine Richtung gesichert. Die Ausnehmungen 520, 524 können in anderen Ausgestaltungen gegensinning für eine Sicherung in beide Richtungen angeordnet sein.

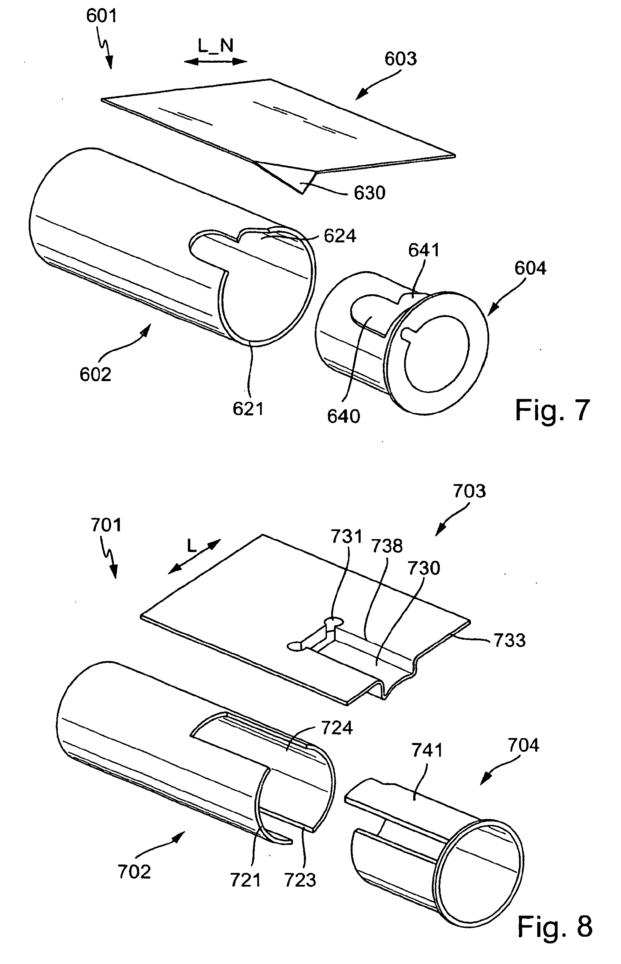

Figur 7 zeigt in einer Explosionsdarstellung einen Endbereich einer Wickelwelle 602 und eines flexiblen Flächengebildes 603 sowie eine Lagerbuchse 604 für ein Rollo 601 gemäß einem siebten Ausführungsbeispiel der Erfindung. Die Wickelwelle 602 weist an ihrem Ende 621 eine Ausnehmung 624 auf. Zum Erzeugen einer Lasche 630 ist eine Ecke des flexiblen Flächengebildes 603 umgeschlagen. Die Lasche 630 kann die Ausnehmung 624 der Wickelwelle 602 eingeführt werden und dort mit der Buchse 603 fixiert werden. Die Ausnehmung 624 weist hierfür eine schräge Flanke auf, deren Winkel im Wesentlichen mit einem Knickwinkel zum Abknicken der Lasche 630 übereinstimmt.

Die Wickelwelle 602 weist eine Nut 623 auf, durch welche die Lagerbuchse 604 beim Einsetzen in das Ende 621 der Wickelwelle 602 drehfest mit der Wickelwelle 602 verbindbar ist. In dem dargestellten Ausführungsbeispiel schließt die Ausnehmung 624 direkt in Umfangsrichtung an die Nut 623 an. An der Lagerbuchse 604 sind eine Feder 640 und eine Rastnase 641 ausgeformt, welche in die Nut 623 bzw. die Ausnehmung 624 eingeführt werden. Die Feder 640 dient dabei der drehfesten Verbindung der Lagerbuchse 604 mit der Wickelwelle 602. Die Rastnase 641 dient einer Klemmung des flexiblen Flächengebildes 603 an der Wickelwelle 602.

Figur 8 zeigt einen Abschnitt einer Wickelwelle 702 und eines flexiblen Flächengebildes 703 sowie eine Lagerbuchse 704 eines Rollos 701 gemäß einem achten Ausführungsbeispiel in einer Explosionsdarstellung. Das flexible Flächengebilde 703 weist ein sich in Längsrichtung L erstreckenden Durchbruch 731 auf und der Durchbruch 731 ist in dem dargestellten Ausführungsbeispiel im Wesentlichen als Schnitt in Längsrichtung L gestaltet, wobei durch kreisförmige Verbreiterung an den Enden des Schnitts ein Ausreißen verhindert werden soll. Das flexible Flächengebilde 703 entspricht im Wesentlichen dem Flächengebilde 303 gemäß Fig. 4b. Wie bei diesem Flächengebilde 303 ist auch hier zwischen dem Durchbruch 731 und einem seitlichen Rand 733 des flexiblen Flächengebildes 703 eine Lasche 730 gegenüber der Ebene des Flächengebildes 703 um Knicklinien 738 abwinkelbar. Die Lasche 730 kann in eine dazu komplementäre Ausnehmung 724 der Wickelwelle 702 eingeführt werden. Zum Fixieren der Lasche 730 in der Ausnehmung 724 ist in dem Ausführungsbeispiel gemäß Figur 8 die Lagerbuchse 704 mit einer Rastnase 741 versehen, welche beim Einschieben der Lagerbuchse 704 in das Ende 721 der Wickelwelle 702 über die in die Ausnehmung 724 eingeführte Lasche 730 geschoben wird. In anderen Worten werden die Rastnase 704 und das flexible Flächengebilde mit einander "verwoben". Dadurch wird das flexible Flächengebilde 703 mit der Wickelwelle 702 verklemmt. An dem nicht dargestellten gegenüberliegenden Ende der Wickelwelle 702 und des flexiblen Flächengebildes 703 können entsprechend Ausnahme 724 und Lasche 730 vorgesehen sein. Für eine drehfeste Verbindung der Lagerbuchse 704 mit der Wickelwelle 702 ist an der Wickelwelle 702 eine Nut 723 vorgesehen und an der Lagerbuchse 704 eine dazu komplementäre Feder 740.

Es versteht sich, dass gleichwohl nur flexible Flächengebilde mit einer rechteckförmigen Grundform dargestellt sind, auch andere Formen, beispielsweise eine Trapezform oder dergleichen, denkbar sind. Erfindungsgemäß ist es auch bei diesen Formen möglich, Laschen ohne (zusätzlichen) Verschnitt an der Grundform des flexiblen Flächengebildes durch entsprechende Schnitte auszubilden.

Weiter ist es denkbar, Schnitte in beliebigen Winkeln zur Gestaltung der Lasche in einem Flächengebilde zu erzeugen, wobei eine zugehörige Wickelwelle Schlitze in korrespondierenden Winkel aufweist.

Die Schnitte können an ihren Schnittenden mit Querschlitzen gestaltet werden, welche ein Einreißen des flexiblen Flächengebildes über den Schnitt hinaus verhindern.

Die Schnitte sind durch Messer, Scheren oder dergleichen in Planen oder ähnlichen Flächengebilden erzeugbar. Weiter ist es denkbar, in gewobenen und/oder geflochtenen Flächengebilden die "Schnitte" bereits bei einer Fertigung vorzusehen, wobei die Schnitte entsprechende Umrandungen aufweisen können, welche ein ungewünschtes Aufreißen verhindern.

## Patentansprüche

1. Verfahren zur Befestigung eines flexiblen Flächengebildes (3, 103, 203, 303, 603, 703) an einer rohrförmigen Wickelwelle (2, 102, 202, 302, 402, 502, 602, 702) umfassend die Schritte:
1) Einbringen mindestens einer, eine Wandung der Wickelwelle durchdringenden Ausnehmung (20, 24, 220, 520, 524, 624, 724) an einem Umfang der rohrförmigen Wickelwelle (2, 102, 202, 302, 402, 502, 602, 702), wobei eine Breite B_S der Ausnehmung (20, 24, 220, 520, 524, 624, 724) größer ist als eine Dicke des flexiblen Flächengebildes (3, 103, 203, 303, 503, 603, 703);
2) Erzeugen von mindestens einer abwinkelbaren Lasche (30, 130, 330, 530, 534, 630, 730) an dem flexiblen Flächengebilde (3, 103, 203, 303, 503, 603, 703);
3) Einführen der Lasche in die Ausnehmung (20, 24, 220, 520, 524, 624, 724) der Wickelwelle (2, 102, 202, 302, 402, 502, 602, 702),
wobei die abwinkelbare Lasche (30, 130, 330, 530, 534, 630, 730) durch Einschneiden des flexiblen Flächengebildes (3, 103, 203, 303, 503) und/oder durch Verformung an einem seitlichen Rand (33, 633, 733) und/oder einer Endkante (34) erzeugt wird, **dadurch gekennzeichnet, dass** die Ausnehmung als Schlitz (20) in Umfangsrichtung mit einer Bogenlänge (L_S), welche kleiner ist als ein Umfang der rohrförmigen Wickelwelle (2, 102), ausgebildet wird, und an dem flexiblen Flächengebilde (3, 103) mindestens eine zu dem Schlitz (20) korrespondierende Lasche (30, 130) mit einer Länge (L_L), die in etwa gleich der Bogenlänge (L_S) ist, durch mindestens einen Schnitt (31) in eine Querrichtung (Q) des flexiblen Flächengebildes (3, 103) erzeugt wird.

2. Verfahren nach Anspruch 1, **dadurch gekennzeichnet, dass** an dem flexiblen Flächengebilde (103) mindestens eine Lasche (130) durch den ersten Schnitt (31) in die Querrichtung (Q) und einen den ersten Schnitt (31) kreuzenden, zweiten Schnitt (131) in die Längsrichtung (L) des flexiblen Flächengebildes (103) erzeugt wird.

3. Rollo, insbesondere zur Anbringung in einem Kraftfahrzeug, umfassend eine rohrförmige Wickelwelle (2, 102, 202, 302, 402, 502, 602, 702) und ein daran auf- und abwickelbar befestigtes Flächengebilde (3, 103, 203, 303, 503, 603, 703), wobei die Wickelwelle (2, 102, 202, 302, 402, 502, 602, 702) mindestens eine eine Wandung der Wickelwelle durchdringende Ausnehmung (20, 24, 220, 520, 524, 624, 724) mit einer Breite (B_S) aufweist, wobei die Breite (B_S) größer ist als eine Dicke des flexiblen Flächengebildes (3, 103, 203, 303, 603, 703), und das flexible Flächengebilde (3, 103, 203, 303, 503, 603, 703) mindestens eine abwinkelbare Lasche aufweist, welche für eine Verbindung des flexiblen Flächengebildes (3, 103, 203, 303, 503, 603, 703) mit der Wickelwelle (2, 102, 202, 302, 402, 502, 602, 702) in die Ausnehmung (20, 24, 220, 520, 524, 624, 724) der Wickelwelle (2, 102, 202, 302, 402, 502, 602, 702) eingeführt ist, **dadurch gekennzeichnet dass** die mindestens eine Ausnehmung als Schlitz (20) in Umfangsrichtung mit einer Bogenlänge (L_S), welche kleiner ist als der Umfang der rohrförmigen Wickelwelle (2, 102), ausgebildet ist, und an dem flexiblen Flächengebilde (3, 103) mindestens eine zu dem Schlitz (20) korrespondierende Lasche (30, 130) mit einer Breite (B_L), die maximal gleich der Bogenlänge (L_S) ist, durch mindestens einen Schnitt (31) in eine Querrichtung (Q) des flexiblen Flächengebildes (3, 103) ausgebildet ist.

4. Rollo nach Anspruch 3, **dadurch gekennzeichnet, dass** der mindestens eine Schlitz (20) in Umfangsrichtung in einem Abstand (A_S) von einem Ende (21, 22) der Wickelwelle (2, 102) eingebracht ist und eine Länge (L_L) der Lasche (20) in etwa gleich dem Abstand (A_S) der Schlitz (20) von dem Ende (21, 22) der Wickelwelle (2, 102) ist.

5. Rollo nach Anspruch 3, **dadurch gekennzeichnet, dass** die Ausnehmung als ein zu einem Ende (21, 22, 621, 721) der Wickelwelle offener Ausschnitt (24, 624, 724) ausgebildet ist.

6. Rollo nach Anspruch 3 oder 4, **dadurch gekennzeichnet, dass** die Ausnehmung als ein im Wesentlichen U-förmiger und/oder V-förmiger Ausschnitt (520, 524) ausgebildet ist.

## Claims

1. Method for fastening a flexible planar structure (3, 103, 203, 303, 603, 703) to a tube-like winding shaft (2, 102, 202, 302, 402, 502, 602, 702), comprising the steps:
1) providing at least one recess (20, 24, 220, 520, 524, 624, 724) passing through a wall of the winding shaft on a circumference of the tube-like winding shaft (2, 102, 202, 302, 402, 502, 602, 702), where a width B_S of said recess (20, 24, 220, 520, 524, 624, 724) is greater than a thickness of the flexible planar structure (3, 103, 203, 303, 503, 603, 703);
2) creating at least one bend-down tab (30, 130, 330, 530, 534, 630, 730) on the flexible planar structure (3, 103, 203, 303, 503, 603, 703);
3) inserting the tab into the recess (20, 24, 220, 520, 524, 624, 724) of the winding shaft (2, 102, 202, 302, 402, 502, 602, 702),
where the bend-down tab (30, 130, 330, 530, 534, 630, 730) is created by cutting into the flexible planar structure (3, 103, 203, 303, 503) and/or by deforming at a lateral rim (33, 633, 733) and/or an end edge (34), **characterized in that** the recess is designed as a slot (20) in the circumferential direction with an arc length (L_S) smaller than the circumference of the tube-like winding shaft (2, 102), and on the flexible planar structure (3, 103) at least one tab (30, 130) corresponding to the slot (20) and with a length (L_L) approximately equal to the arc length (L_S) is created by at least one cut (31) in a transverse direction (Q) of the flexible planar structure (3, 103).

2. Method according to Claim 1, **characterized in that** at least one tab (130) is created on the flexible planar structure (103) by the first cut (31) in the transverse direction (Q) and a second cut (131) intersecting the first cut (31) in the longitudinal direction (L) of the flexible planar structure (103).

3. Roller blind, in particular for fitting inside a motor vehicle, comprising a tube-like winding shaft (2, 102, 202, 302, 402, 502, 602, 702), and a planar structure (3, 103, 203, 303, 503, 603, 703) fastened windably and unwindably thereon, where the winding shaft (2, 102, 202, 302, 402, 502, 602, 702) has at least one recess (20, 24, 220, 520, 524, 624, 724) with a width (B_S) passing through a wall of the winding shaft, where said width (B_S) is greater than a thickness of the flexible planar structure (3, 103, 203, 303, 603, 703) and the flexible planar structure (3, 103, 203, 303, 503, 603, 703) has at least one bend-down tab which is inserted into the recess (20, 24, 220, 520, 524, 624, 724) of the winding shaft (2, 102, 202, 302, 402, 502, 602, 702) for connecting the flexible planar structure (3, 103, 203, 303, 503, 603, 703) to the winding shaft (2, 102, 202, 302, 402, 502, 602, 702), **characterized in that** the at least one recess is designed as a slot (20) in the circumferential direction with an arc length (L_S) smaller than the circumference of the tube-like winding shaft (2, 102) and on the flexible planar structure (3, 103) at least one tab (30, 130) corresponding to the slot (20) and with a width (B_L) at most equal to the length (L_S) is created by at least one cut (31) in a transverse direction (Q) of the flexible planar structure (3, 103).

4. Roller blind according to Claim 3, **characterized in that** the at least one slot (20) is provided in the circumferential direction at a distance (A_S) from an end (21, 22) of the winding shaft (2, 102), and a length (L_L) of the tab (30) is approximately equal to the distance (A_S) of the slot (20) from the end (21, 22) of the winding shaft (2, 102).

5. Roller blind according to Claim 3, **characterized in that** the recess is designed as a cutout (24, 624, 724) open to one end (21, 22, 621, 721) of the winding shaft.

6. Roller blind according to Claim 3 or 4, **characterized in that** the recess is designed as a substantially U-shaped or V-shaped cutout (520, 524).

## Revendications

1. Procédé pour fixer une structure plane souple (3, 103, 203, 303, 603, 703) à un arbre d'enroulement tubulaire (2, 102, 202, 302, 402, 502, 602, 702), comprenant les étapes suivantes :
1) Façonnage sur un pourtour de l'arbre d'enroulement tubulaire (2, 102, 202, 302, 402, 502, 602, 702) d'au moins un évidement (20, 24, 220, 520, 524, 624, 724) traversant une paroi de l'arbre d'enroulement, sachant qu'une largeur B_S de l'évidement (20, 24, 220, 520, 524, 624, 724) est supérieure à une épaisseur de la structure plane souple (3, 103, 203, 303, 503, 603, 703) ;
2) confection d'au moins une patte rabattable (30, 130, 330, 530, 534, 630, 730) sur la structure plane souple (3, 103, 203, 303, 503, 603, 703) ;
3) introduction de la patte dans l'évidement (20, 24, 220, 520, 524, 624, 724) de l'arbre d'enroulement (2, 102, 202, 302, 402, 502, 602, 702), sachant que la patte rabattable (30, 130, 330, 530, 534, 630, 730) est confectionnée par entaillage de la structure plane souple (3, 103, 203, 303, 503) et/ou par déformation sur un bord latéral (33, 633, 733) et/ou sur un bord d'extrémité (34), **caractérisé en ce que** l'évidement est formé en tant que fente (20) dans le sens circonférentiel avec une longueur d'arc (L_S) inférieure à une circonférence de l'arbre d'enroulement tubulaire (2, 102), et que sur la structure plane souple (3, 103) est confectionnée, par au moins une entaille (31) dans le sens transversal (Q) de la structure plane souple (3, 103), au moins une patte (30, 130) correspondant à la fente (20) et ayant une longueur (L_L) approximativement égale à la longueur d'arc (L_S).

2. Procédé selon la revendication 1, **caractérisé en ce que** sur la structure plane souple (103) est confectionnée au moins une patte (130) par la première entaille (31) dans le sens transversal (Q) et par une seconde entaille (131) croisant la première entaille (31) dans le sens longitudinal (L) de la structure plane souple (103).

3. Store, destiné en particulier à être monté dans un véhicule automobile, comprenant un arbre d'enroulement tubulaire (2, 102, 202, 302, 402, 502, 602, 702) et une structure plane (3, 103, 203, 303, 503, 603, 703) fixée à celui-ci de manière enroulable et déroulable, sachant que l'arbre d'enroulement (2, 102, 202, 302, 402, 502, 602, 702) présente au moins un évidement (20, 24, 220, 520, 524, 624, 724) traversant une paroi de l'arbre d'enroulement et ayant une largeur (B_S), que la largeur (B_S) est supérieure à une épaisseur de la structure plane souple (3, 103, 203, 303, 603, 703), que la structure plane souple (3, 103, 203, 303, 503, 603, 703) présente au moins une patte rabattable qui est introduite dans l'évidement (20, 24, 220, 520, 524, 624, 724) de l'arbre d'enroulement (2, 102, 202, 302, 402, 502, 602, 702) afin de réaliser une liaison de la structure plane souple (3, 103, 203, 303, 503, 603, 703) avec l'arbre d'enroulement (2, 102, 202, 302, 402, 502, 602, 702), **caractérisé en ce que** l'au moins un évidement est formé en tant que fente (20) dans le sens circonférentiel avec une longueur d'arc (L_S) inférieure à la circonférence de l'arbre d'enroulement tubulaire (2, 102), et que sur la structure plane souple (3, 103) est formée, par au moins une entaille (31) dans un sens transversal (Q) de la structure plane souple (3, 103), au moins une patte (30, 130) correspondant à la fente (20) et ayant une largeur (B_L) au maximum égale à la longueur d'arc (L_S).

4. Store selon la revendication 3, **caractérisé en ce que** l'au moins une fente (20) est façonnée dans le sens circonférentiel à une distance (A_S) d'une extrémité (21, 22) de l'arbre d'enroulement (2, 102), et qu'une longueur (L_L) de la patte (30) est approximativement égale à la distance (A_S) entre la fente (20) et l'extrémité (21, 22) de l'arbre d'enroulement (2, 102).

5. Store selon la revendication 3, **caractérisé en ce que** l'évidement est formé en tant que découpe (24, 624, 724) ouverte à une extrémité (21, 22, 621. 721) de l'arbre d'enroulement.

6. Store selon la revendication 3 ou 4, **caractérisé en ce que** l'évidement est formé en tant que découpe (520, 524) pour l'essentiel en forme de U et/ou en forme de V.
